# EUROPEAN PATENT APPLICATION

(11) **EP 2 671 627 A1**
(43) Date of publication of application: **11.12.2013**
(21) Application number: 12170882.0
(22) Date of filing: 05.06.2012
(51) Int. Cl.: B01D 69/12, B01D 67/00, B01D 39/16

(54) **High flux nanofibrous membrane**

(71) Applicant: Universiteit Gent, 9000 Gent (BE)
(72) Inventor: Westbroek, Philippe, 9200 Dendermonde (BE)
(74) Representative: Wauters, Davy Erik Angelo

(57) **Abstract**

A membrane structure is disclosed. The membrane structure comprises at least one layer of polymeric nanofibres. The nanofibres thereby have an average diameter between 300nm and 500nm. The mean flow pore size of the layer of nanofibres layer is between 3µm and 10µm. The basis weight of the at least one layer of polymeric nanofibres is between 0.1 g/m² and 0.5 g/m².

## Description

### Field of the invention

The present invention relates to filtering technology. More particularly, the present invention relates to a membrane structure and the use thereof for filtering purposes.

### Background of the invention

Filtration can be performed based on a large number of physical and/or chemical techniques. One of the most popular techniques for filtering is membrane filtering, whereby components of a fluid flow are stopped by a membrane filter, due to blocking and/or absorption effects of the filter.

The possibility to use membranes for filtering fluids at high fluxes results in a advantageously efficient filtering applications. Typically the higher the flux that can be withstand by the membrane, the more efficient the filtering process can be performed. For applications such as waste water filtering and fluid food filtering where large amounts of fluids need to be treated and where the membrane filtering may be the bottleneck in the process, the possibility to increase the flux may be of high economical importance.

A number of products allowing a high flux already exists, but it is to be noticed that besides a high flux, also the cut-off of the membrane filters is an important parameter. The cut-off of the membrane filter determines downto which size particles are stopped by the membrane filter and which part of the particles is not filtered, due to their too small size. Typically, the smaller the cut-off size, the smaller the flux. Therefore, the combination of flux and cut-off need to be taken into account.

Another problem that needs to be considered is that in a large number of applications, the materials used for filtering, must be compatible with the application. For example for fluid food filtering or blood filtering, it will be a problem if the filter material dissolves in the fluid. Therefore, it is important to be able to provide application compatible membrane filters.

A plurality of filter membranes are known in the field at present. One example of a conventional filter structure includes a porous membrane and non-porous structural components whereby the non-porous structural components provide the strength to withstand a high differential pressure. Structural components also may be used for allowing bi-directional flow, e.g. for back-flushing the filter.

There still is a need for good high flux filters, manufacturing techniques for such filters, and use of such filters for high flux filtering applications.

### Summary of the invention

It is an object of embodiments of the present invention to provide efficient high flux filter structures, methods for manufacturing them and methods of using them.

It is an advantage of embodiments of the present invention that membranes are provided allowing accurate and efficient filtering for a plurality of applications at high flux.

The above objective is accomplished by a method and device according to the present invention.

The present invention relates to a membrane structure, the membrane structure comprising at least one layer of polymeric nanofibres, wherein the nanofibres have an average diameter between 300nm and 500nm, the mean flow pore size of the layer of nanofibres layer is between 3µm and 10µm, and the basis weight of the at least one layer of polymeric nanofibres is between 0.1 g/m² and 0.5 g/m².

It is an advantage of embodiments according to the present invention that membrane structures are provided allowing a surprisingly high flux throughput of at least 20000 liter/m²/hour at a pressure of 20mbar, while still having an appropriate cut-off.

The polymeric nanofibres may be any of polyamide nanofibres, polyester fibres or polyurethane fibres. It is an advantage of embodiments of the present invention that a membrane structure can be produced in a material type that can be used in a variety of applications, such as for example for general filtration purposes, in food filtration, for effluent polishing, for blood filtration, etc.

The polymeric nanofibres may be electrospun nanofibres. It is an advantage of embodiments of the present invention that a production technique can be used that allows for mass production that allows easily scaling up.

The nanofibres may have an average diameter between 400nm and 500nm.

The mean flow pore size is larger than 5µm and smaller than 10µm.

The membrane structure furthermore may comprise a carrier substrate and an adhesive, part of the adhesive being embedded in part of the carrier substrate and part of the adhesive being present as a coating locally around the nanofibres thus forming coated nanofibres. It is an advantage of embodiments according to the present invention that membrane structures are provided that are suitable for high flux throughput, e.g. up to 200000 l/u/m² at 20 mbar pressure, advantageously up to 300000 l/u/m² at 20 mbar pressure, while still being resistant to delamination. It is an advantage of embodiments according to the present invention that membrane structures are provided that are suitable for backflushing for cleaning the membrane structure when used for filtering, while still being resistant to delamination. The adhesive may provide a fixation between the carrier substrate and the layer of nanofibres that is resistant to a flow pressure of 20 mbar during at least 4 minutes. The carrier substrate may be fixed by the adhesive to the nanofibrous layer and wherein the fixation is performed by obtaining at least a first carrier substrate, providing adhesive on the at least first carrier substrate, heating the adhesive up to or above its melting temperature and below the melting temperature of the at least first carrier substrate for inducing an interaction of the adhesive with the at least first carrier substrate and thereafter reducing the temperature below the melting temperature of the adhesive thus obtaining at least one adhesive carrier substrate, thereafter, providing the layer of nanofibres on the adhesive-side of the at least one adhesive carrier substrate to form a further structure, bringing the further structure up to or above the melting temperature of the adhesive and below the melting temperature of the at least first carrier substrate and of the nanofibres for inducing an interaction between the adhesive and the nanofibres, and reducing the temperature below the melting temperature of the adhesive thus obtaining the membrane structure. It is an advantage of embodiments according to the present invention that a very strong fixation can be obtained. The fixation provided between the carrier substrate and the layer of nanofibres may be resistant to a flow pressure of 20 mbar during at least 4 minutes.

The layer of nanofibres may be a layer of nanofibres deposited in an atmosphere having a humidity of at least 60%.

The at least one layer of nanofibres may be substantially uniform having substantially the same average fibre diameter throughout the thickness of the layer.

The average fibre diameter of the fibres in the at least one layer of nanofibres may vary according to a predetermined profile.

The present invention also relates to the use of a membrane structure as described above for filtering. The present invention thus also relates to a method for filtering a substance, the method comprising guiding the substrate through a membrane structure as described above. It is an advantage of embodiments according to the present invention that membrane structures as described above can be used for effluent polishing, for blood filtration, for fluid food filtration, etc.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

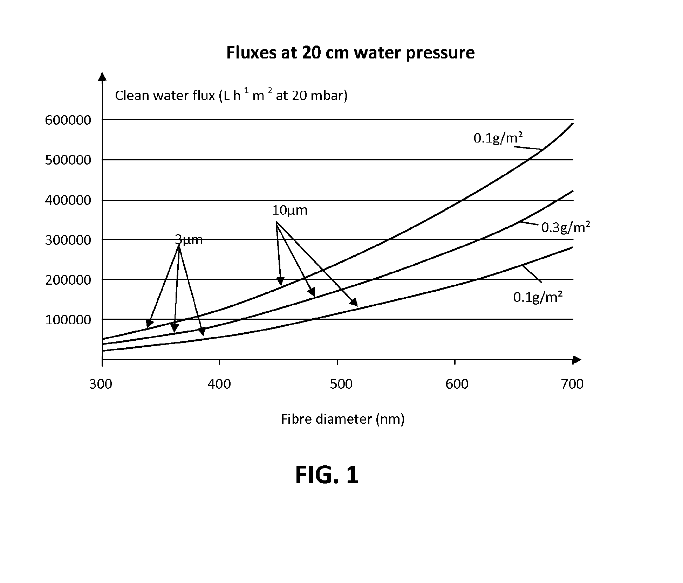

FIG. 1 illustrates examples of experimental results for waste water filtering using membrane structures according to embodiments of the present invention.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments according to the present invention reference is made to nanofibers or nanofibrous materials or objects, reference is made to fibres having an average diameter in the range 10nm to 1µm. The average diameter thereby is taken in a direction perpendicular to the length of the fiber. The average diameter in the present example is determined based on SEM. This method may be used as characterisation method in embodiments of the present invention. Where in embodiments according to the present invention reference is made to mean flow pore size, reference is made to the average diameter of void spaces in between the fibres of the layer of nanofibres. The mean flow pore size in the present example is determined based on the bubble point test. For the bubble point test, the membrane is saturated with water and an air pressure is applied. The first bubble that passes the membrane at a given pressure is linked to the largest pore. By changing the pressure and evaluating the air passage, the pore size distribution is determined. From the pore size distribution, the average flow pore size is determined. Other parameters such as largest pore size, smallest pore size and pore size distribution, which also are membrane characteristics that illustrate filtration properties of the membrane and that are linked to the naofiber diameter of the fibres also can be determined. This method may be used as characterisation method in embodiments of the present invention.

Where in embodiments according to the present invention reference is made to the average mass density of the layer of nanofibres, reference is made to the mass per square meter of nanofibre layer. It can be determined using conventional weighing techniques of a nanofibre layer of a known size.

Where in embodiments according to the present invention reference is made to a carrier substrate, reference is made to a substrate that allows normal manual manipulation without damaging or breaking. The carrier substrate typically may be adapted for carrying a layer that is as such not strong enough to remain undamaged between manipulation or use.

Where in embodiments according to the present invention reference is made to an adhesive, reference is made to a material adapted for mechanically fixing a first material with a second material. Alternatively, adhesive also may be referred to as glue.

Where in embodiments according to the present invention reference is made to an adhesive carrier substrate, reference is made to a carrier substrate which has interacted with an adhesive such that, optionally after heating, other material can be mechanically fixed thereto by means of the adhesive. Where in embodiments of the present invention reference is made to an adhesive side of a carrier substrate, reference may be made to the side of the carrier substrate at which the adhesive is originally applied.

In a first aspect, the present invention relates to a membrane structure comprising at least one layer of polymeric nanofibres. It was surprisingly found that membrane structures according to embodiments of the present invention combining a number of properties are suitable for operation at significantly higher fluxes than conventional membrane structures for a cut off in a range 3µm to 10µm. Although embodiments of the present inventions are not limited thereto, the membrane structures thus are especially suitable for high flux filtering. Where in embodiments of the present invention reference is made to a high flux, reference may be made to a flux, at a pressure of 20 mbar, of at least 15000 liter/hour/m², more advantageously of at least 20000 liter/hour/m².

The properties of the membrane structures resulting in such a high flux are :
- the nanofibres have an average diameter between 300nm and 500nm,
- the mean flow pore size of the layer of nanofibres layer is between 3µm and 10µm, and
- the basis weight of the at least one layer of polymeric nanofibres is between 0.1 g/m² and 0.5 g/m².

In some embodiments, the nanofibres advantageously may have an average diameter that is between 400nm and 500nm. In some embodiments, the mean flow pore size advantageously may be larger than 5µm and smaller than 10µm.

The polymeric nanofibres may be any of polyamide, polyurethane, polyethersulfon, polyvinylidenefluoride, celluloseacetate, polyesteramide, polyethyleneoxide, polyethyleneimine, polysulfon, polytetrafluoroethylene, etc.. A particular example of a material that can be used are polyamide 6. Nanofibres have the advantage of having a large specific surface, resulting in good adsorbance properties for particles to be filtered from the flux of material. The nanofibres may be made using any suitable technique, such as for example using electrospinning or applying meltblown fibres. It is an advantage of embodiments according to the present invention that electrospinning can be easily applied in the manufacturing method. By way of illustration, embodiments of the present invention not being limited thereto, electrospinning of materials may be performed for example using a multi-nozzle comprising a set of outlets for outputting solution or melt. The outlets are adapted for outputting material, e.g. solution or melt material to be used for the production of the fibres. In advantageous embodiments, a relatively large spacing between the nozzles may provide resulting in advantageous properties of the fibres deposited. Electrospinning may be performed by applying an electric field between the nozzles and a receiving surface and by moving the nozzles relative to the receiving surface. Electrospinning of the fibres may make use of the technology as described by Westbroek et al. in US patent application US2010/215939 and/or of the technology described in US patent application US2010/0112020, although embodiments of the present invention are not limited thereto.

The layer of nanofibres may be a layer of nanofibres deposited in an atmosphere having a humidity of at least 60%.

The at least one layer of nanofibres may be substantially uniform having substantially the same average fibre diameter throughout the thickness of the layer. For example, the standard deviation of the thickness throughout the fibrous structure may be lower than 80%, advantageously lower than 50%, more advantageously lower than 20%.

According to some advantageous embodiments, the average fibre diameter of the fibres in the at least one layer of nanofibres may vary according to a predetermined profile. Such a variation of thickness may be stepwise or may be a continuous variation.

The variation of the thickness thereby is obtained in the depth direction of the membrane.

The pore size may be uniform over the membrane or may vary according to a predetermined profile. Typically for filtering, the membrane advantageously may have an inlet side and an outlet side, whereby at the inlet side the pore size is larger than at the outlet side. The pore size may for example decrease continuously or stepwise from the inlet side to the outlet side. The latter is advantageous as it may prevent quick blocking of the membrane filter structure.

According to at least some embodiments of the present invention, the membrane structure furthermore may comprise a carrier substrate. In embodiments, the carrier substrate may be fixed to the layer of nanofibres using an adhesive. In advantageous embodiments, part of the adhesive being embedded in part of the carrier substrate and part of the adhesive being present as a coating locally around the nanofibres thus forming coated nanofibres. For providing adhesive, a technique may be used as described in more detail below. The adhesive may provide a fixation between the carrier substrate and the layer of nanofibres that is resistant to a flow pressure of 20 mbar during at least 4 minutes. It is an advantage of at least some embodiments according to the present invention that membrane structures are provided that are suitable for high flux throughput, e.g. up to 200000 l/u/m² at 20 mbar pressure, advantageously up to 300000 l/u/m² at 20 mbar pressure, while still being resistant to delamination. Furthermore, the presence of a carrier substrate also assists in allowing backflushing without a further structural element separate from the membrane structure being required. The carrier substrate may be any suitable substrate which is sufficiently porous so that the flux drop over the fibrous filter is determined by the micro- or nanofibres introduced in the fibrous filter and not by the carrier substrate. It may be a woven or non-woven substrate. It may be advantageous to use a non-woven substrate as this may improve the fixation between the layers in the fibrous filter. It may be made of any suitable material, such as for example a polyester, polyamide, polyurethane, polyvinylchloride, a polyethylene, a PTFE, etc.

The adhesive used may be provided in any suitable manner, e.g. as a porous adhesive layer, e.g. a porous adhesive membrane. It may for example be a non-woven layer of adhesive. The adhesive may for example be a polyurethane. The amount of adhesive provided in the method may for example be lower than 50 g/m², more advantageously less than 25 g/m², still more advantageously less than 20 g/m², still more advantageously less than 16 g/m². The best suitable amount of adhesive for a given carrier substrate and a given micro-or nanofibrous layer may be determined in a test experiment. Such a test experiment may for example comprise a test of the drop in flux (the flux will drop if the amount of adhesive is higher) combined with a test of the strength of the device, e.g. its robustness against de-lamination. The first test can be done by measuring the flux before and after the fibrous membrane and the second test can e.g. be performed by holding the fibrous device in a flow under high pressure for a predetermined time. Combination of the lowest drop in flux and sufficient robustness to de-lamination results in the best amount of adhesive used. By way of illustration, embodiments of the present invention no being limited thereto, a method for manufacturing a membrane structure as described above will further be explained.

The layer of nanofibres forming the core of the membrane structure as described above may advantageously be manufactured using an electrospinning technique, although embodiments of the present invention are not limited thereto and where suitable other techniques could be used. In advantageous embodiments, the layer of nanofibres is formed using a multi-nozzle electrospinning technique. One process for manufacturing the layer of nanofibres may comprise the steps of applying a potential difference, i.e. a voltage between a set of three or more neighbouring outlets and a planar surface, moving the set of outlets and a planar surface relatively to each other, and providing a solution or melt to the outlets. The outlets thereby are advantageously separated from one another by a distance of at least 4 cm. The solution or melt may be kept in a recipient which may but does not have to be temperature controlled. Providing the solution or melt can be performed by solution or melt actuating means for providing the solution or melt to the outlets. Those means such as e.g. a pump transfer the solution or melt to the outlets via transfer means which may but do not have to be temperature controlled. Once at an outlets, the solution or melt forms a droplet from which a filament will be drawn and projected towards the planar surface under the action of the potential difference. The potential difference may be selected in the range between 100 and 200000 V. For processing, the voltage applied may be around 30000V, e.g. between 20000V and 40000V. The shape of the jet of solution or melt leaving an outlet is usually conical and forms a so-called umbrella, i.e. a covered area on the planar surface. In an advantageous embodiment of the present invention, due to a reciprocal lateral relative movement of the outlets toward the receiving surface, the umbrella overlaps and form a fibrous structure such as a mat composed of fibres. The planar surface typically is moved continuously or stepwise in one direction (different from the reciprocal movement) to form a web of a layer of nanofibres. By controlling the speed of the continuous or stepwise movement, the average mass density of the layer of nanofibres can be controlled.

Furthermore advantageously following processing parameters may be used. The nozzles may be spaced over at least 1cm. The polymer solution pump rate can for example be fixed at 2mL per hour. The collector speed is adjusted between 5 mm/s (for a 0.5g/m² membrane) and 1 mm/s (for a 0.1 g/m² membrane). The nozzle tip to collector distance is adjusted between 12cm (for a 300nm average fiber diameter) and 7cm (for a 500nm average fiber diameter). The nozzle plate may be moved from right to left and back with a speed of 20 mm/s and with an amplitude of 75mm.

In some embodiments, a variation in one or more properties of the layer of nanofibres can be obtained by implementing a technique as described in US patent application US2010/215939.

The layer of nanofibres can be deposited on a carrier substrate. Advantageously, the layer of nanofibres and the carrier substrate are fixed to each other using adhesive. One advantageous method for providing such an adhesive is described hereafter. According to embodiments of the present invention the method is applied such that the adhesive first interacts with the carrier substrate, and thereafter interaction between the micro- or nanofibrous layer and at least part of the adhesive that has interacted with the carrier substrate is obtained. More particularly, according to embodiments of the present invention, the method comprises obtaining at least a first carrier substrate and obtaining adhesive on at least a first carrier substrate. The adhesive is then heated up to or above its melting temperature and below the melting temperature of the first carrier substrate for inducing an interaction of the adhesive with the at least a first carrier substrate thus creating at least one adhesive carrier substrate. Thereafter, a layer of micro- or nanofibres is provided on the adhesive-side of the at least one adhesive carrier substrate to form a further structure. The provision of a layer of micro- or nanofibres also may be performed after the adhesive carrier substrate has cooled down, e.g. below the melting temperature of the adhesive. The further structure then is brought up to or above the melting temperature of the adhesive and below the melting temperature of the first carrier substrate and of the micro- or nanofibres for inducing an interaction between the adhesive and the micro- or nanofibres. After cooling, below the melting temperature of the adhesive the micro- or nanofibrous filter is obtained. According to some embodiments of the present invention, interaction of the adhesive with the carrier substrate or with the layer of micro- or nanofibres may be enhanced by applying a pressure during the interaction process. Such a pressure may for example be between 0 kN/m² and 100 kN/m², e.g. applying about 40 kN/m², embodiments of the present invention not being limited thereby.

In one aspect, the present invention also relates to a method for depositing a layer of nanofibres, the method comprising electrospinning fibres in an environment having a high humidity. With a high humidity there may be meant a humidity of at least 60%, advantageously at least 70%. The humidity may e.g. be larger than 60% at a temperature of 25°. The latter allows for electrospinning using a high polymer concentration in the mixture used for electrospinning. Further steps may be one or more of the method steps and/or features of the fabrication methods described above.

In one aspect, the present invention also relates to the use of a membrane structure as described above for filtering applications. It is an advantage of embodiments of the present invention that applications requiring a cut-off in the range 3 µm to 10 µm can be performed using a membrane structure according to embodiments of the present invention. Moreover, such applications can be performed efficiently, as the membranes according to embodiments of the present invention allow high fluxes, e.g. a flux of up to 15000 liter/hour/m² and higher, advantageously 20000 liter/hour/m² and higher. Applications that are envisaged comprise effluent polishing, blood filtration, fluid food filtration, pharmaceutical filtration such as filtration of medicines after synthesis which typically can be done using microfilter membranes, e.g. having a cut-off in the range 1 to 20 micrometer, etc. The membrane structures according to at least some embodiments of the present invention can advantageously be used in filtering applications wherein backflushing is applied, without the need for separate additional structural elements. The latter is advantageously obtained when a membrane structure is used comprising a carrier substrate and being glued to the at least one layer of polymeric nanofibres based on a technique as described above, as the latter provides an extremely good fixation between the carrier substrate and the layer of polymeric nanofibres allowing to prevent delamination.

By way of illustration, embodiments of the present invention not being limited thereto, an example of the use of a membrane according to an embodiment of the present invention is discussed below. An exemplary membrane structure was used for waste water filtration and the effect of the filtering was studied. The membrane structure comprised a layer of nanofibers of polyamides and polyethersulfon, having an average fiber diameter of 400nm. The support was a web of fibres having a diameter with a diameter between 10 and 40 micron. The layer of nanofibers was supported by a carrier substrate glued to the layer of nanofibers using a technique as described above. When using this membrane structure as filtering element for waste water comprising 45 mg/liter suspended solids, after filtering a drop in the solids content could be seen to 11 mg/liter. The latter indicates the advantages of at least some embodiments of the present invention describing the use of membrane structures for filtering.

By way of illustration, embodiments of the present invention not being limited thereto, a number of membrane structures were manufactured and tested for waste water filtering applications.

The membrane structures comprises a layer of nanofibres prepared from polyamide 6 dissolved in a 50 / 50 w/w% mixture of formic / acetic acid. For manufacturing the layer of nanofibres, these solutions were electrospun at voltages around 30000 V, with a tip to collector distance of 6cm and at a relative humidity above 60%. The collector speed of the roll collector used was varied, in order to obtaine membranes containing a nanofiber layer with a different average density, varying from 0.1 g/m², over 0.3 g/m² to 0.5 g/m². According to embodiments of the present invention the layer of nanofibres was supported on a carrier substrate. The membrane fiberdiameter varied from 300nm to 500nm and a pore size in the range 3µm to 10µm was obtained.

Influent waste water comprising 45 mg/liter of suspended solids was used for performing the filtering tests. It was for example found that by applying a membrane structure comprising a layer of fibres with a fibre diameter of 500nm and an average mass density of 0.1 g/m² the amount of suspended solids dropped from 45 mg/liter to 11mg/liter. Using a membrane structure comprising a layer of fibres with a fibre diameter of 300nm, the layer having a mass density of 0.5 g/m², it was found that the suspended solids content could be dropped from 45 mg/liter to 0.2 mg/liter.

By way of illustration, embodiments of the present invention not being limited thereto, different experimental results are shown in FIG. 1 illustrating the clean water flux at 20mbar obtainable for different average fibre diameters, different average mass density and different pore sizes, i.e. in the range 3µm to 10µm. the clean water flux thereby is the flux of clean water passing over the filter, without something being filter. The curves for average mass densities of 0.1 g/m², 0.3 g/m² and 0.5 g/m² are shown, each curve being a best fit through 10 experimental measurement points. It can be seen that clean water fluxes can be obtained well above 20000 liter/hour/m², in some examples being even above 50000 liter/hour/m².

## Claims

1. A membrane structure, the membrane structure comprising at least one layer of polymeric nanofibres, wherein
- the nanofibres have an average diameter between 300nm and 500nm, and
- the mean flow pore size of the layer of nanofibres layer is between 3µm and 10µm, and
- the basis weight of the at least one layer of polymeric nanofibres is between 0.1 g/m² and 0.5 g/m².

2. A membrane structure according to claim 1, wherein the polymeric nanofibres are any of polyamide nanofibres, polyester fibres or polyurethane fibres.

3. A membrane structure according to any of claims 1 or 2, wherein the polymeric nanofibres are electrospun nanofibres.

4. A membrane structure according to any of the previous claims, wherein the nanofibres have an average diameter between 400nm and 500nm.

5. A membrane structure according to any of the previous claims, wherein the mean flow pore size is larger than 5µm and smaller than 10µm.

6. A membrane structure according to any of the previous claims, the membrane structure furthermore comprising a carrier substrate and an adhesive, part of the adhesive being embedded in part of the carrier substrate and part of the adhesive being present as a coating locally around the nanofibres thus forming coated nanofibres.

7. A membrane structure according to claim 6, wherein the carrier substrate is fixed by the adhesive to the nanofibrous layer and wherein the fixation is performed by obtaining at least a first carrier substrate, providing adhesive on the at least first carrier substrate, heating the adhesive up to or above its melting temperature and below the melting temperature of the at least first carrier substrate for inducing an interaction of the adhesive with the at least first carrier substrate and thereafter reducing the temperature below the melting temperature of the adhesive thus obtaining at least one adhesive carrier substrate, thereafter, providing the layer of nanofibres on the adhesive-side of the at least one adhesive carrier substrate to form a further structure, bringing the further structure up to or above the melting temperature of the adhesive and below the melting temperature of the at least first carrier substrate and of the nanofibres for inducing an interaction between the adhesive and the nanofibres, and reducing the temperature below the melting temperature of the adhesive thus obtaining the membrane structure.

8. A membrane structure according to any of the previous claims, wherein the layer of nanofibres is a layer of nanofibres deposited in an atmosphere having a humidity of at least 60%.

9. A membrane structure according to any of the previous claims, wherein the at least one layer of nanofibres is substantially uniform having substantially the same average fibre diameter throughout the thickness of the layer.

10. A membrane structure according to any of claims 1 to 8, wherein the average fibre diameter of the fibres in the at least one layer of nanofibres varies according to a predetermined profile.

11. Use of a membrane structure according to any of the previous claims for filtering.
